# EUROPÄISCHE PATENTSCHRIFT

(11) **EP 2 867 556 B1**
(45) Veröffentlichungstag und Bekanntmachung des Hinweises auf die Patenterteilung: **14.11.2018**
(21) Anmeldenummer: 13732481.0
(22) Anmeldetag: 27.06.2013
(51) Int. Cl.: F16D 65/18

(54) **SCHEIBENBREMSE**
DISK BRAKE
FREIN A DISQUE

(30) Priorität: 28.06.2012 DE 102012012831
(43) Veröffentlichungstag der Anmeldung: 06.05.2015
(73) Patentinhaber: KNORR-BREMSE Systeme für Nutzfahrzeuge GmbH, 80809 München (DE)
(72) Erfinder: CAMILO-MARTINEZ, Jose, 82008 Unterhaching (DE); PRITZ, Wolfgang, 80637 München (DE); MACK, Martin, 80809 München (DE)
(86) Internationale Anmeldenummer: PCT/EP2013/063512
(87) Internationale Veröffentlichungsnummer: WO 2014/001454

(56) Entgegenhaltungen:
- EP-A1- 2 444 698
- EP-A2- 2 431 627
- WO-A2-2009/074222
- US-A1- 2011 233 013

## Beschreibung

Die Erfindung betrifft eine Scheibenbremse gemäß dem Oberbegriff des Anspruchs 1.

Um in einem Aufnahmeraum des Bremssattels angeordnete funktionsrelevante Bauteile vor Korrosion durch Witterungseinflüsse zu schützen, ist eine Montageöffnung des Aufnahmeraums auf der bei einer Schiebesattelbremse dem zuspannseitigen Bremsbelag zugeordneten Seite durch einen Verschlussdeckel weitgehend verschlossen.

Dabei weist der Verschlussdeckel Öffnungen auf, durch die Bremsstempel geführt sind, die bei einer Bremsung mittels der Zuspanneinrichtung gegen den Bremsbelag gedrückt werden. Dieses Funktionsprinzip ist sowohl bei einer Scheibenbremse mit einem zentralen Bremsstempel wie auch bei einer solchen mit mehreren, vorzugsweise zwei parallel und abständig zueinander angeordneten Bremsstempeln verwirklicht. Der Einfachheit halber wird im Folgenden die Variante mit einem Bremsstempel beschrieben.

Zur Abdichtung des Durchtrittsbereichs des Bremsstempels ist ein Faltenbalg vorgesehen, der einerseits an dem Bremsstempel dichtend anliegt und andererseits am Verschlussdeckel befestigt ist, hier üblicherweise an einem die Durchtrittsöffnung randseitig begrenzenden, achsparallel zum Bremsstempel ausgerichteten Kragen.

Als redundantes Dichtungselement ist zusätzlich eine sogenannte Sekundärdichtung vorgesehen, die in Richtung des Aufnahmeraums dem Faltenbalg nachgeordnet ist und durch die bei einem möglichen Versagen des Faltenbalgs der Aufnahmeraum vor grobem Schmutz geschützt wird.

Diese konzentrisch zum Faltenbalg angeordnete Sekundärdichtung liegt fest am Bremsstempel an und ist formschlüssig am Kragen des Verschlussdeckels gehalten. Hierzu sind bei den bekannten Konstruktionen entsprechende Ausformungen des Kragens vorgesehen, in die daran angepasste Haltemittel der Sekundärdichtung eingreifen.

Allerdings sind die vielfach sickenförmig gestalteten Ausformungen des Kragens nur mit erheblichem fertigungstechnischen Aufwand herstellbar, da sie üblicherweise bei dem aus Blech bestehenden Verschlussdeckel durch Stanzen eingebracht werden. Diese relativ komplizierte Sickenkontur steht einer einfachen und kostengünstigen Herstellung entgegen, wozu auch die Bereitstellung entsprechend aufwändiger Werkzeug zählt.

Bei einer Zuspannung der Bremse wird der Bremsstempel axial verschoben, so dass die daran fest anliegende Sekundärdichtung, die, wie erwähnt, andererseits an dem ortsfesten Verschlussdeckel gehalten ist, entsprechend verformt wird. Um diese Verformung beschädigungsfrei zu ermöglichen, muss die Sekundärdichtung mit einer sozusagen Ausgleichsfaltung versehen werden, was nur mit einem entsprechend hohen Fertigungsaufwand möglich ist, der einer Optimierung der Herstellungskosten entgegensteht.

Darüber hinaus ist durch den Faltenbalg einerseits und die Sekundärdichtung andererseits ein Innenraum gebildet. Für einen notwendigen Druckausgleich dieses Innenraums gegenüber der Umgebung muss entweder in der Sekundärdichtung oder im Faltenbalg eine Öffnung vorhanden sein. Deren Einbringen erfordert gleichfalls einen hohen Fertigungsaufwand, einschließlich entsprechender Werkzeugkosten. Alles in allem stellt sich die bekannte Dichtungsanordnung als unbefriedigende Lösung der Abdichtung des Aufnahmeraums dar.

Eine gattungsgemäße Scheibenbremse, bei der die Sekundärdichtung gleitend am Bremsstempel anliegt, ist jeweils aus der EP 2 444 698 A1, der US 2011/0233013 A1 sowie der EP 2 4301 627 A2 bekannt.

Der Erfindung liegt die Aufgabe zugrunde, eine Scheibenbremse der gattungsgemäßen Art so weiterzuentwickeln, dass die Sekundärdichtung einfacher und damit kostengünstiger herstellbar ist und ihre Funktionssicherheit verbessert wird.

Diese Aufgabe wird durch eine Scheibenbremse mit den Merkmalen des Anspruchs 1 gelöst.

Nach der Erfindung ist vorgesehen, die Sekundärdichtung federbelastet an der Verschlussplatte zu halten. Hierzu kann beispielsweise eine Schraubenfeder vorgesehen sein, die den Bremsstempel umschließt und mit einer Stirnseite an der Sekundärdichtung, konkret am Trägerelement, und mit ihrer anderen Stirnseite an einem mit dem Bremsstempel verbundenen Bauteil anliegt.

Diese Druckfeder kann neben der Anpressfunktion für die Sekundärdichtung der Rückstellung des Bremsstempels bei einer Bremsunterbrechung dienen, gegebenenfalls auch der Rückführung des angeschlossenen Bremsbelages, wenn dieser axial gesichert mit dem Bremsstempel verbunden ist.

Zwar bildet sich auch hier zwischen dem Faltenbalg und der Sekundärdichtung ein Innenraum, jedoch wird ein Druckausgleich dadurch erreicht, dass das Trägerelement mittelbar, d.h., ohne Dichtung und damit nicht luftdicht am Verschlussdeckel anliegt.

Dadurch, dass die Sekundärdichtung gleitend am Bremsstempel anliegt, tritt das zum Stand der Technik beschriebene Walken nicht mehr auf, was zum einen die Belastung der Sekundärdichtung in signifikanter Weise minimiert und zum anderen eine wesentlich einfachere Herstellung der Sekundärdichtung erlaubt, insbesondere deshalb, weil auf die beschriebene Ausgleichsfaltung verzichtet werden kann.

Dabei kann die Sekundärdichtung aus einem starren Trägerelement bestehen, beispielsweise aus einem durch einfaches Umformen hergestelltes Blechteil, in das an entsprechender Stelle Dichtmaterial eingefügt ist.

Dieses Dichtmaterial erfüllt seine Funktion bereits mit einem geringen Mengenanteil, woraus sich eine Senkung der Herstellungskosten ergibt, ebenso wie aus der beschriebenen einfachen Fertigung des Trägerelementes. Denkbar ist, als Dichtmaterial einen handelsüblichen, genormten O-Ring einzusetzen, der am Bremsstempel anliegt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer teilweise geschnittenen Draufsicht
- Figur 2: einen Teilausschnitt der Scheibenbremse in einer geschnittenen Seitenansicht
- Figur 3: eine Einzelheit der Scheibenbremse in einer perspektivischen Ansicht
- Figur 4: einen Schnitt durch die Einzelheit nach Figur 3.

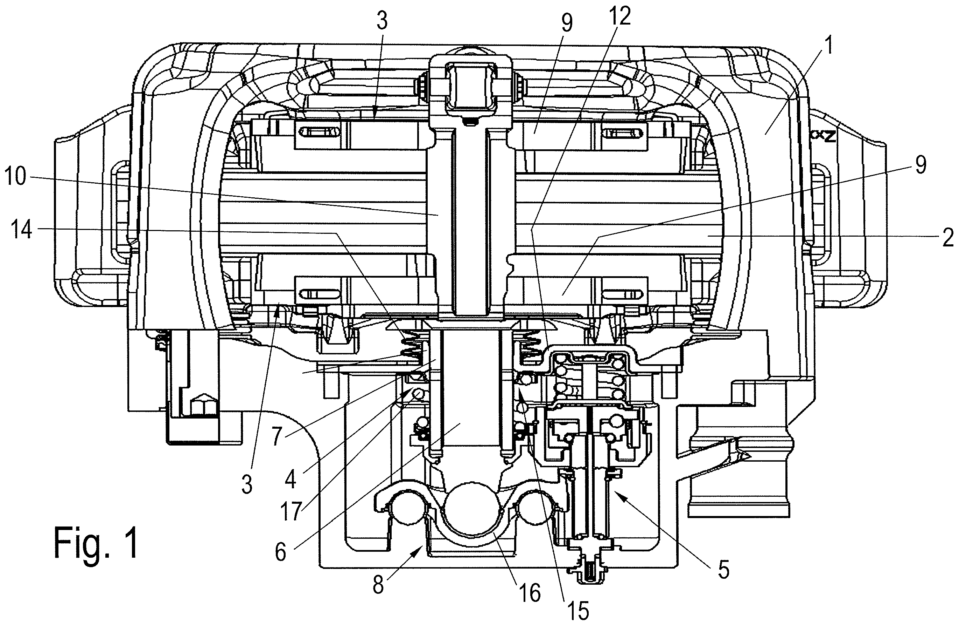

In der Figur 1 ist in schematischer Darstellung eine Scheibenbremse erkennbar, mit einem eine Bremsscheibe 2 übergreifenden, als Schiebesattel ausgebildeten Bremssattel 1, in dem zwei Bremsbeläge 3 angeordnet sind, die in Funktion, also bei einer Bremsung, gegen die Bremsscheibe 2 pressbar sind.

Dabei wird zunächst der zuspannseitige Bremsbelag 3 mittels einer Zuspanneinrichtung 8 gegen die Bremsscheibe 2 gepresst, während nachfolgend, aufgrund der Reaktionskräfte durch Mitnahme des sich verschiebenden Bremssattels 1 der reaktionsseitige Bremsbelag 3 gegen die Bremsscheibe 2 gepresst wird.

An den Bremsbelägen 3 ist jeweils eine Belaghaltefeder 9 befestigt, die im Zusammenwirken mit einem Haltebügel 10 die Bremsbeläge 3 unter Vorspannung in einem Bremsschacht des Bremssattels 1 oder eines Bremsträgers hält.

Die Zuspanneinrichtung 8 weist einen Bremsstempel 4 auf, der zentral angeordnet über einen Bremshebel 16 axial verschiebbar gegen den zuspannseitigen Bremsbelag 3 pressbar ist.

Dabei besteht der Bremsstempel 4 aus einer Stellspindel 6, mit der eine Nachstelleinrichtung 5 zum Ausgleich eines Lüftspiels in Verbindung steht, sowie einer Hülse 7, die mit einem Innengewinde in ein Außengewinde der Stellspindel 6 eingreift und die verdrehsicher am zugeordneten Bremsbelag 3 angeschlossen ist.

Ein die Funktionsteile wie die Zuspanneinrichtung 8, den Bremsstempel 4 und die Nachstelleinrichtung 5 aufnehmender Aufnahmeraum des Bremssattels 1 ist auf der dem Bremsbelag 3 zugewandten Seite durch eine Verschlussplatte 12 verschlossen, um so die Funktionsteile vor Witterungseinflüssen zu schützen.

Dabei durchtritt der Bremsstempel 4 die Verschlussplatte 12 durch eine umfänglich mittels eines angeformten Kragens 13 begrenzte Durchtrittsöffnung. Diese ist auf der dem Aufnahmeraum abgewandten äußeren Seite durch einen Faltenbalg 14 verschlossen, der einerseits am Kragen 13 und andererseits am Bremsstempel 4 dichtend gehalten ist.

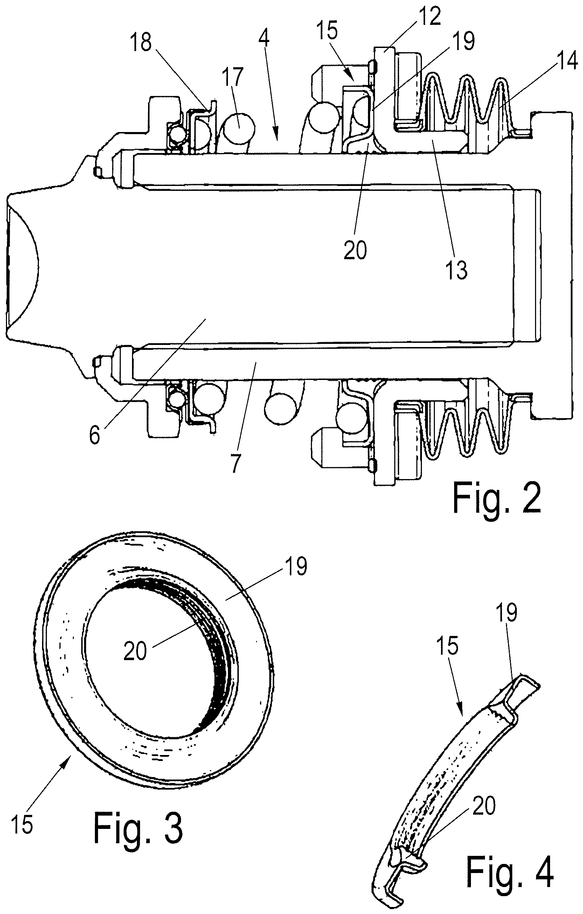

An der dem Faltenbalg 14 gegenüberliegenden, also der Innenseite des Verschlussdeckels 12, ist eine Sekundärdichtung 15 vorgesehen, die als Einzelheit in den Figuren 2-4 erkennbar ist.

Dabei besteht diese Sekundärdichtung 15 aus einem als Blechformteil ausgebildeten Trägerelement 19, an dem eine Dichtung 20 befestigt ist, die in einer anderen Ausführungsvariante als O-Ring ausgebildet sein kann, der formschlüssig in einer entsprechenden Aufnahme des Trägerelementes 19 gehalten ist. In jedem Fall liegt die Dichtung 20 und damit die gesamte Sekundärdichtung 15 gleitend und damit verformungsfrei am Bremsstempel 4, genauer an der Mantelfläche der Hülse 7 an.

Zur Halterung an der Verschlussplatte 12 ist das Trägerelement 19 durch eine Druckfeder 17 angepresst, die als Schraubenfeder den Bremsstempel 4 umfängt. Auf der dem Trägerelement 19 gegenüberliegenden Seite liegt die Druckfeder 17 an einem mit dem Bremsstempel 4 verbundenen Aufnahmeteil 18 an, so dass die Druckfeder 17 bei einer Zuspannung der Bremse, bei der der Bremsstempel 4 axial bewegt wird, gespannt wird und bei einem Lösen der Bremse der Bremsstempel 4 durch die Entspannung der Druckfeder 17 zurückgeführt wird.

Im Übrigen wird zum Ausgleich eines Lüftspiels die Stellspindel 6 gegenüber der fest stehenden Hülse 7 verdreht, so dass diese sich relativ zur Stellspindel 6 axial in Richtung des Bremsbelages 3 bewegt.

Bei dem in den Figuren 3 und 4 gezeigten Beispiel der Sekundärdichtung 15 ist die Dichtung 20 auf das als Blechformteil ausgebildete Trägerelement 19 aufgespritzt und mit mehreren die Hülse 7 kontaktierenden umfänglichen Dichtlippen versehen. Denkbar ist jedoch auch, die Dichtung mit lediglich einer Dichtlippe auszustatten.

Wie erkennbar, ist der Materialanteil der Dichtung 20 im Verhältnis zum Materialanteil der gesamten Sekundärdichtung 15 gering, wodurch sich eine erhebliche Kosteneinsparung gegenüber der Sekundärdichtung nach dem Stand der Technik ergibt, die insgesamt aus einem Dichtmaterial hergestellt ist.

## Patentansprüche

1. Scheibenbremse, mit einem Bremssattel (1), in dem zwei in Funktion gegen eine Bremsscheibe (2) pressbare Bremsbeläge (3) angeordnet sind, von denen ein aktionsseitiger über mindestens einen Bremsstempel (4) mittels einer Zuspanneinrichtung (8) betätigbar ist, und der Bremsstempel (4) durch eine Öffnung eines Verschlussdeckels (12) geführt ist, der einen Aufnahmeraum des Bremssattels (1) verschließt, wobei zur Abdichtung des Aufnahmeraums ein Faltenbalg (14) am Bremsstempel (4) und andererseits am Verschlussdeckel (8) anliegt, an dem des Weiteren eine konzentrisch zum Faltenbalg (14) angeordnete, am Bremsstempel (4) gleitend anliegende Sekundärdichtung (15) gehalten ist, **dadurch gekennzeichnet, dass** die Sekundärdichtung (15) federbelastet am Verschlussdeckel (12) anliegt.

2. Scheibenbremse nach Anspruch 1, **dadurch gekennzeichnet, dass** die Sekundärdichtung (12) auf der dem Faltenbalg (14) gegenüberliegenden Seite des Verschlussdeckels (12) anliegt.

3. Scheibenbremse nach Anspruch 1 oder 2, **dadurch gekennzeichnet, dass** sich an der Sekundärdichtung (15) eine Druckfeder (17) abstützt, die andererseits an einem mit dem Bremsstempel (4) verbundenen Teil anliegt.

4. Scheibenbremse nach einem der vorhergehenden Ansprüche, **dadurch gekennzeichnet, dass** die Sekundärdichtung (15) ein formstabiles Trägerelement (19) aufweist, an dem eine Dichtung (20) gehalten ist, die am Bremsstempel (4) anliegt.

5. Scheibenbremse nach Anspruch 4, **dadurch gekennzeichnet, dass** das Trägerelement (19) als Blechformteil ausgebildet ist.

6. Scheibenbremse nach einem der Ansprüche 4 oder 5, **dadurch gekennzeichnet, dass** die Dichtung (20) an das Trägerelement (19) angespritzt ist und mindestens eine Dichtlippe aufweist.

7. Scheibenbremse nach einem der Ansprüche 4 bis 6, **dadurch gekennzeichnet, dass** die Dichtung (20) aus einem O-Ring besteht.

8. Scheibenbremse nach Anspruch 7, **dadurch gekennzeichnet, dass** der O-Ring in einer Aufnahme des Trägerelementes (19) form- und/oder reibschlüssig gehalten ist.

## Claims

1. A disc brake having a brake calliper (1) in which are positioned two brake pads (3) which can be pressed against a brake disc (2) when in operation, It being possible to actuate one of these brake pads on the action side by at least one brake plunger (4) by means of an application device (8), the brake plunger (4) passing through an opening in a cover plate (12) which closes a receiving space in the brake calliper (1), there being provided to seal the receiving space a bellows (14) which abuts the brake plunger (4) on one side and the cover plate (12) on the other, a secondary seal (15) arranged concentrically in relation to the bellows (14) and abutting the secondary seal (15) such that it is able to slide also being held against said cover plate (12), **characterised in that** the secondary seal (15) lies springloaded against the cover plate (12).

2. A disc brake according to claim 1, **characterised in that** the secondary seal (15) abuts the side of the cover plate (12) opposite the bellows (14).

3. A disc brake according to claim 1 or 2, **characterised in that** supported on the secondary seal (15) is a pressure spring (17), which abuts on the other side on a part connected to the brake plunger (4).

4. A disc brake according to any of the preceding claims, **characterised in that** the secondary seal (15) has a dimensionally stable carrier element (19) on which is held a seal (20) that abuts the brake plunger (4).

5. A disc brake according to claim 4, **characterised in that** the carrier element (19) is designed as a formed sheet metal part.

6. A disc brake according to either of claims 4 or 5, **characterised in that** the seal (20) is sprayed onto the carrier element (19) and has at least one sealing lip.

7. A disc brake according to any of claims 4 to 6, **characterised in that** the seal (20) consists of an O-ring.

8. A disc brake according to claim 7, **characterised in that** the O-ring is held in a positive-locking or frictional connection in a recess in the carrier element (19).

## Revendications

1. Frein à disque, comprenant un étrier (1) de frein, dans lequel sont montées deux garnitures (3) de frein, qui en fonctionnement peuvent être pressées sur un disque (2) de frein, et dont- l'une, du côté de l'action, peut être actionnée par au moins un piston (4) de frein, au moyen d'un dispositif (8) de serrage, et le piston (4) de frein est guidé dans une ouverture d'un couvercle (12) de fermeture, qui ferme un espace de réception de l'étrier (1) de frein, dans lequel pour rendre étanche l'espace de réception, un soufflet (14) à plis s'applique au piston (4) de frein et d'autre part au couvercle (8) de fermeture, sur lequel en outre est maintenue une étanchéité (15) secondaire disposée concentriquement au soufflet (14) à plis et s'appliquant à glissement au piston (4) de frein, **caractérisé en ce que** l'étanchéité (15) secondaire s'applique au couvercle (12) de fermeture en étant soumise à l'action d'un ressort.

2. Frein à disque suivant la revendication 1, **caractérisé en ce que** l'étanchéité (12) secondaire s'applique au côté, opposé au soufflet (14) à plis, du couvercle (12) de fermeture.

3. Frein à disque suivant la revendication 1 ou 2, **caractérisé en ce que** sur l'étanchéité (15) secondaire s'appuie un ressort (17) de compression, qui s'applique d'autre part, à une partie reliée au piston (4) de frein.

4. Frein à disque suivant l'une des revendications précédentes, **caractérisé en ce que** l'étanchéité (15) secondaire a un élément (19) de support de forme stable, sur lequel est maintenue une étanchéité (20) qui s'applique au piston (4) de frein.

5. Frein à disque suivant la revendication 4, **caractérisé en ce que** l'élément (19) de support est constitué sous la forme d'une pièce conformée de tôle.

6. Frein à disque suivant l'une des revendications 4 ou 5, **caractérisé en ce que** l'étanchéité (20) est injectée sur l'élément (19) de support et à au moins une lèvre d'étanchéité.

7. Frein à disque suivant l'une des revendications 4 à 6, **caractérisé en ce que** l'étanchéité (20) est constituée d'un joint torique.

8. Frein à disque suivant la revendication 7, **caractérisé en ce que** le joint torique est retenu à complémentarité de forme et/ou par frottement dans un logement de l'élément (19) de support.
